# EUROPEAN PATENT APPLICATION

(11) **EP 4 843 734 A1**
(43) Date of publication of application: **25.11.2026**
(21) Application number: 26179140.4
(22) Date of filing: 18.05.2026
(51) Int. Cl.: B27D 5/00, B29C 63/00

(54) **METHOD FOR FEEDING AN EDGE-BANDER MACHINE**

(30) Priority: 23.05.2025 IT 202500011872
(71) Applicant: TECNO LOGICA S.R.L., 31027 Spresiano (TV) (IT)
(72) Inventor: Toniolo, Carlo, 31027 Spresiano (TV) (IT)
(74) Representative: Citron, Massimiliano

(57) **Abstract**

A method is described for feeding an edge-banding machine with a tape to be applied to an edge of a panel, with the steps of
a) moving a shuttle device to a first position in correspondence with a tape storage unit;
b) dispensing a segment of tape from the tape storage unit and loading it onto the shuttle device; c) moving the shuttle device to a second position in correspondence with a tape loading area of the edge-banding machine ;
d) transferring the segment of tape from the shuttle device to the edge-banding machine.

## Description

The present invention relates to a tape loading method and apparatus for feeding an edge-banding machine.

Inline panel edge-banding machines (*edge-banders*) are known to glue a segment of tape to the edge of the panel by cutting it from a reel. In such machines, the panel is processed by various operating units while it is in motion, and the tape is fed to the edge-banding unit of the edge-bander.

To allow the production of different panels, a storage unit holding many tape reels is provided on board the machine or in its immediate vicinity. The tapes from each reel are guided into converging channels, arranged sunburst-like, from which the leading edges of each tape protrude so that the edge-banding machine can grip, pull, and cut them as needed.

In itself, the tape storage unit is very bulky and complex, i.e. expensive, and feeding the edge-bander with the required tape each time heavily penalizes the edge-banding cycle time.

Even more advanced edge-banders, which operate by applying a tape segment that has already been precut, must still be continuously fed with a new segment after the edge-banding of each panel. Consequently, the logistical and mechanical problem of how to select the tape to be applied from the storage unit and how to load it onto the edge-bander arises again in this case.

In other known machines, namely edge-banding machining centers, the panels are arranged and locked on a horizontal worktable and are subjected to the various machining operations thanks to the movement of a processing head and an edge-banding head arranged on a crossbar. In such machines, the edge-banding head moves to an area of the machine where one or more tape reels are stored. By means of an unwinding and cutting unit, the machine unwinds and cuts the amount of tape required for a single operation. Subsequently, the edge-banding head, with the segment of cut tape dangling, moves toward the panel to be edge-banded. These machines have the disadvantage that the edge-banding head must frequently go to load the tape, and furthermore, since the tape remains hanging, it can be damaged.

The main object of the invention is to eliminate or mitigate the aforementioned drawbacks.

Another object is to improve the speed of loading the tape onto an edge-banding machine.

Another object is to improve the operating speed of an edge-banding machine by eliminating or at least reducing the idle times for loading the tape.

At least one object is achieved by what is attached hereto in the claims.

Therefore, a method is proposed for loading an edge-banding machine with tape to be applied to an edge of a panel, comprising the steps of:
a) moving a shuttle device to a first position at a tape storage unit;
b) dispensing a segment of tape from the tape storage unit and loading it onto the shuttle device;
c) moving the shuttle device to a second position at a tape loading zone of the edge-banding machine;
d) transferring the segment of tape from the shuttle device to the edge-banding machine.

An advantage of the method is that the structural or logistical complexity of the tape storage unit does not affect that of the edge-banding machine, given that the tape storage unit and the edge-banding machine are separate and interfaced by the shuttle device. In other words, the edge-banding machine, except during step d), can operate independently of the operation of the shuttle device.

Another advantage is that the selection and pick-up of tape from the tape storage unit can take place while the edge-banding machine is applying the tape onto the panel, significantly shortening the cycle time.

Preferably, the method comprises the step e) of applying the segment of tape received from the shuttle device onto a panel edge by means of the edge-banding machine, i.e. the edge-banding machine applies the segment of tape received from the shuttle device onto a panel edge.

Preferably, the method comprises the step e) of moving the edge-banding machine in space to travel along an edge of the panel and apply the tape picked up from the shuttle device to the edge. In particular, the edge-banding machine is a CNC machine with at least three axes, and in step e) the edge-banding machine is moved along the three axes to apply the tape picked up from the shuttle device to the edge.

In one embodiment, said edge-banding machine is an edge-banding head, preferably mounted on a CNC machine with at least 3 axes.

In one embodiment, the edge-banding machine comprises a vertical support surface for the panel to be edge-banded.

In one embodiment, the edge-banding machine comprises one or more stations in which one or more edge-banding heads as defined above are installed. Within the station of the edge-banding machine, such heads can be arranged on one or more carriages moved along Y and/or X by means of known drives.

Preferably, the edge-banding head is slidably mounted on a vertical column, or on two parallel vertical columns, and is moved therein along the Z axis by means of known drives.

In the case where a single vertical column is provided, the edge-banding head can be movable, by means of known dedicated drives, along Y, thus allowing movement along Y. In the case where two vertical columns are provided, the head can be supported by one or more carriages mounted movably along Y and/or X by means of drives.

In particular, the edge-banding machine may comprise a central member, for example rotatable about Z (a vertical axis parallel to the support surface of the edge-banding machine), and M processing stations, M >= 2, arranged in a circular series with a constant angular pitch around the central member, the edge-banding head being installed in at least one of the M stations.

In one embodiment, said member consists of a rotatable central drum from which with radial symmetry radial arms extend radially outwards and towards the stations, supporting a respective vertical support surface at their ends. The support surfaces may be, for example, M+1 (to maximize production efficiency) and arranged uniformly around the drum in a circular series with a constant angular pitch. The M stations, on the other hand, are arranged so as to leave a circular sector around the drum free. By means of the rotation of the rotatable member, using known drives, each support surface can be rotated and brought in sequence in front of each of the stations or the free sector.

Preferably, loading/unloading means are provided near the free sector to feed panels to the rotatable member through the free sector. Preferably, the means comprise a robot.

In one embodiment, during at least step e), preferably during all steps a) to e), the panel is maintained in a vertical plane.

In one embodiment, during at least step e), preferably during all steps a) to e), the edge of the panel onto which the segment of tape is applied is maintained vertical.

In one embodiment, during at least step e), preferably during all steps a) to e), the edge of the panel onto which the segment of tape is applied is maintained horizontal.

In one embodiment, at least one of the steps a) to c), preferably all of them, takes place simultaneously with step e), i.e. at least one of the steps a) to c) takes place while the edge-banding machine is applying a tape onto a panel.

In one embodiment, steps a) and c) take place by moving the shuttle device only linearly and alternatingly between the first position and the second position.

In one embodiment, during step b), a segment of tape is cut from a reel of the storage unit to separate the segment of tape from the reel and load it onto the shuttle device. Preferably, a/the segment of tape is cut to separate it from a reel by means of a cutting device placed on board the shuttle device.

In one embodiment, the tape storage unit comprises a plurality of reels from which free ends of tape extend, arranged in an array, and:
during step a), the shuttle device moves along the array to stop in front of a tape end, and
during step b), the shuttle device grips (or clamps) and pulls a tape end to unwind a segment of tape from a reel, and then the tape is cut to separate the segment of tape from the reel and load it onto the shuttle device.

In one embodiment:
during or before step b), the shuttle device aligns a tape container with a tape end to load a segment of tape into the tape container, and
during or before step d), the shuttle device aligns its own tape container containing the cut segment of tape with a tape container mounted on the edge-banding machine, and
in step d), the segment of tape is transferred from the tape container of the shuttle device to the tape container of the edge-banding machine.

In one embodiment, during step b), a segment of tape is loaded by winding it into a circular tape accumulation carried by the shuttle device, in particular by winding it inside the tape container of the shuttle device.

In one embodiment, during step d), a segment of tape is loaded onto the edge-banding machine by winding it into a circular tape accumulation carried by the edge-banding machine, in particular by winding it inside the tape container of the edge-banding machine.

In one embodiment, during or after step a), the shuttle device rotates its own tape container in a first direction to align a loading port thereof with a tape end to be picked up, and the segment of tape is transferred from the tape storage unit to the tape container by passing through the loading port in a first sense.

In one embodiment, before step d), the shuttle device rotates its own tape container in a direction opposite to the first direction to align the loading port with the tape container of the edge-banding machine, and the segment of tape is loaded from the container of the shuttle device to the container of the edge-banding machine by passing through the loading port of the container of the shuttle device in a direction opposite to the first direction.

Another aspect of the invention relates to an edge-banding machine or an edge-banding head comprising means for performing the aforementioned method, in one or each of the defined variants.

Another aspect of the invention relates to a tape loading apparatus comprising means for performing the aforementioned method, in one or each of the defined variants.

In one embodiment, the apparatus comprises a tape storage unit carrying tape reels, the tape of which has an accessible and grippable free end.

In one embodiment, the apparatus comprises an edge-banding machine, in particular an edge-banding head adapted to spread a layer of adhesive on an edge of a panel and then spread and glue onto it a segment of tape picked up from the tape storage unit; and/or the edge-banding head is adapted to spread a layer of adhesive on a segment of tape picked up from the tape storage unit and then spread the segment on an edge of a panel to stick them together.

In one embodiment, the apparatus comprises a shuttle device which is movable to load a segment of tape onto the edge-banding head by picking it up from the tape storage unit.

In one embodiment, the shuttle device comprises a slider which is movable on a guide so as to be able to move alternatingly between two positions: a first position at the tape storage unit and a second position at a tape loading zone in the edge-banding head.

In one embodiment, the slider is movable on the guide to be able to move linearly, or only linearly, between the two said positions.

In one embodiment, the guide is linear, in particular formed by two mutually parallel rails which are telescopically slidable relative to each other by means of a drive.

In one embodiment, a rotatable table supports the panel vertically during edge-banding.

In one embodiment, the slider is slidably mounted on one of the rails to be able to slide relative thereto thanks to a drive.

In one embodiment, the slider comprises a container adapted to store, in particular wind, a segment of tape through a loading port that gives access to the inside of the container.

In one embodiment, the container is an empty cylindrical cage for housing the segment of tape.

In one embodiment, the loading port or the container of the slider comprises a gripper mounted to grip a free end of tape in the tape storage unit and drag it inside the container of the slider.

In one embodiment, the edge-banding head comprises a container and relative loading port, identical to and/or compatible with the container and the loading port of the slider.

In particular, said loading ports have a sufficiently narrow cross-section to allow smooth passage of the segment of tape while keeping it stretched out.

In one embodiment, one or each loading port is a tunnel or beak protruding, preferably tangentially, from the periphery of the relative container.

In one embodiment, the container of the slider is rotatable about a horizontal axis relative to the rest of the slider, so as to rotate the respective loading port about the X axis, preferably by at least 180 degrees.

In one embodiment, the container of the edge-banding head is rotatable about a horizontal axis relative to the rest of the edge-banding head, so as to rotate the respective loading port about the X axis, preferably by at least 180 degrees.

Each of the variants defined above can be implemented alone or in combination with one or each of the others.

The advantages of the invention will be further clarified by preferred embodiments described below with reference to the accompanying drawings, in which:
- Figure 1 shows a schematic plan view of a tape loading apparatus;
- Figure 2 shows a schematic plan view of the tape loading apparatus in a different operating configuration;
- Figure 3 shows a three-dimensional view of a tape loading apparatus;
- Figure 4 shows an enlargement of the dashed circle in Fig. 3;
- Figure 5 shows an enlarged detail of the apparatus in Fig. 3.

Identical numbers in the figures indicate identical or substantially identical parts. To avoid crowding the drawings, identical elements are sometimes not numbered.

We define a set of Cartesian directions or axes XYZ, where X and Y are horizontal axes mutually orthogonal to each other and Z is the vertical direction or axis which is orthogonal to the XY plane.

For the sake of brevity, expressions such as "along X" mean a displacement along an axis coinciding with or parallel to the X axis.

For the sake of brevity, expressions such as "around X" mean a rotation about an axis coinciding with or parallel to the X axis.

An edge-banding plant for panel edges comprises a tape loading apparatus 10, which in turn comprises:
a tape storage unit 20,
a shuttle device 40, and
an edge-banding machine, in particular an edge-banding head 80.

The tape storage unit 20 may also be of known and/or any construction, provided that the tapes of each reel 22 have an accessible and grippable free end 24.

The edge-banding head 80 is adapted to spread a layer of adhesive on an edge of a panel and then spread and glue onto it a segment of tape picked up from the tape storage unit 20; and/or the edge-banding head 80 is adapted to spread a layer of adhesive on a segment of tape picked up from the tape storage unit 20 and then spread the segment on an edge of a panel to stick them together.

Thanks to the apparatus 10, such segment of tape can be selected from various reels 22 of the tape storage unit 20 in real time, so that it is also possible to apply a different edge for each panel being processed.

Indeed, the shuttle device 40 operates to load onto the edge-banding head 80 the segment of tape required by the current processing operation, picking it up from the tape storage unit 20.

In one embodiment, the shuttle device 40 comprises a slider 42 which is movable on a guide 44 so as to be able to move in reciprocating manner between two positions: a first position P1 at the tape storage unit 20 and a second position P2 at a tape loading zone in the edge-banding head 80.

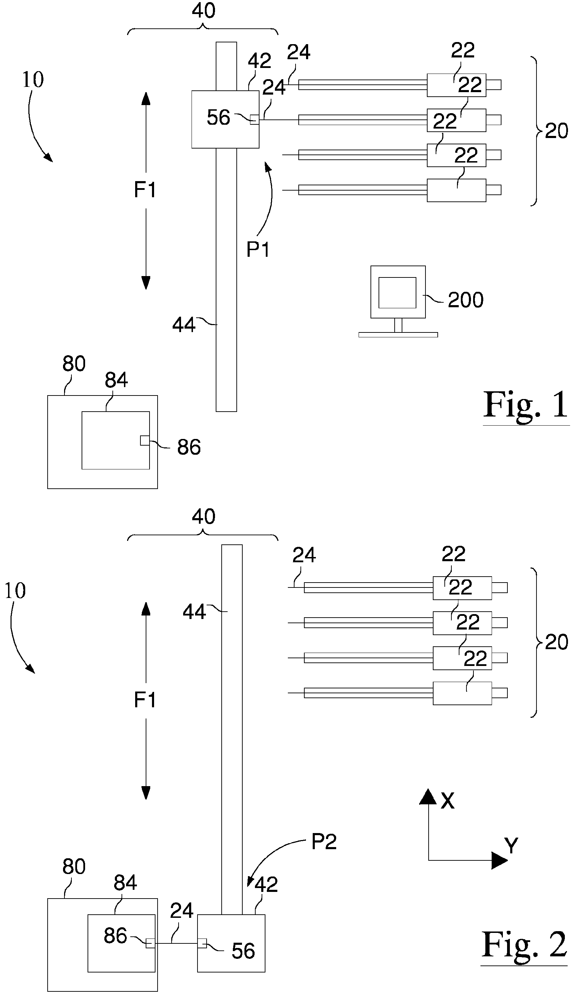

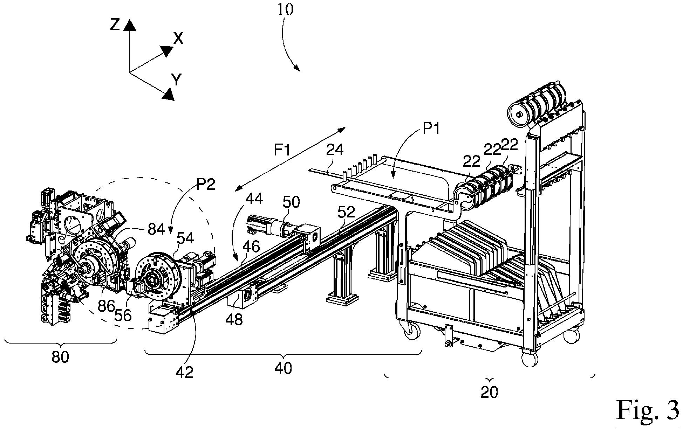

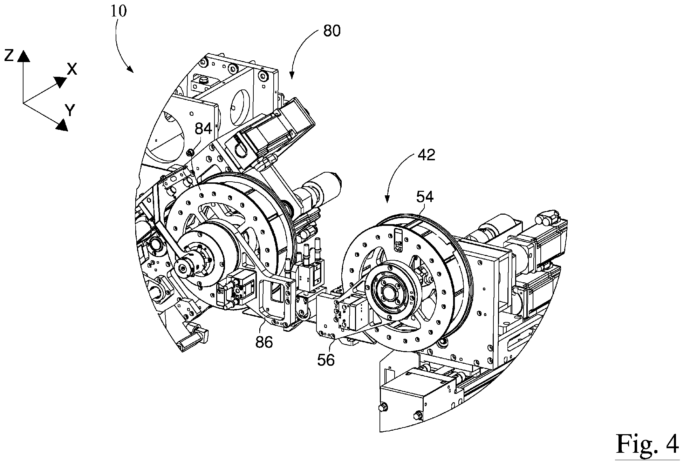

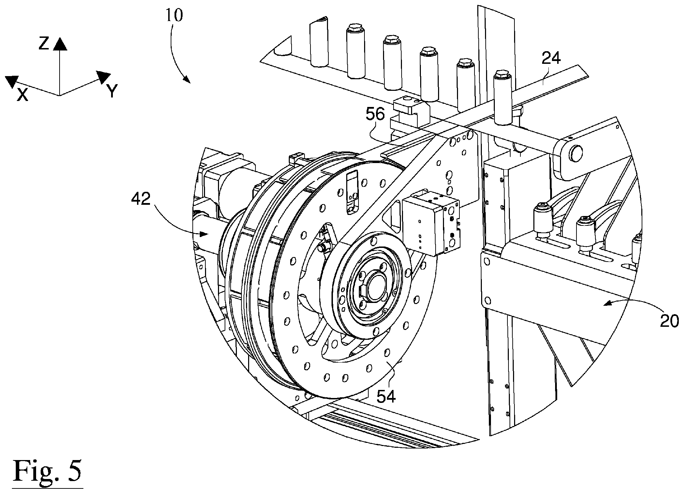

Figs. 3-5 illustrate an embodiment of the apparatus 10 in detail, while Figs. 1 and 3 schematically illustrate the essential functions and elements of the apparatus.

In one embodiment, the slider 42 is movable on the guide 44 to be able to move linearly, or only linearly, between the two positions P1, P2.

In one embodiment, the guide 44 is linear, in particular formed by two rails 46, 52 parallel to each other which are telescopically slidable relative to each other by means of a drive 48. This telescopic structure increases the stroke of the slider 42, and is useful, for example, in an embodiment in which a rotatable table (not shown) supports the panel vertically during edge-banding: the telescopic structure allows insertion of the slider 42 inside or in proximity of the rotatable table.

Another advantage of the telescopic structure is the dimensional compactness of the apparatus 10.

The slider 42 is slidably mounted on the rail 46, the upper one, to be able to slide relative to it thanks to a drive 50.

Overall, the slider 42 manages to move between positions P1, P2 by sliding along X only on the rail 52, or by sliding the two rails 46, 52 relatively along X, or with both kinematics (see arrow F1).

In one embodiment, the slider 42 comprises a storage unit or container 54 adapted to store, in particular wind, a segment of tape through a loading port 56 that gives access to the inside of the storage unit 54. In one embodiment, the storage unit 54 is an empty cylindrical cage for housing the segment of tape. In one embodiment, the loading port 56 or the storage unit 54 comprises a gripper mounted to grip a free end 24 and drag it inside the storage unit 54.

In one embodiment, the edge-banding head 80 also comprises a storage unit 84 and relative loading port 86, identical to and/or compatible with the storage unit 54 and the loading port 56.

The loading ports 56, 86 have a sufficiently narrow cross-section to allow smooth passage of the segment of tape while keeping it stretched out.

In one embodiment, the loading port 56 and/or 86 is a tunnel or beak protruding, preferably tangentially, from the periphery of the relative storage unit 54, 84.

In one embodiment, the storage unit 54 is rotatable about X relative to the rest of the slider 42, so as to rotate the loading port 56 about the X axis, preferably by at least 180 degrees.

### OPERATION

While the edge-banding head 80 is applying a segment of tape onto a panel, picking it up from its own storage unit 84, the slider 42 moves to position P1 and the storage unit 54 is rotated to point the loading port 56 toward the tape storage unit 20. The position along X of the slider 42 and of the loading port 56 now corresponds to the free end 24 of the reel from which tape needs to be picked up for the next panel.

A segment of tape is loaded from a reel 22 into the storage unit 54 through the loading port 56. Once the desired length is reached, the tape of the reel 22 is cut by a cutting means, which is preferably placed on board the slider 42.

Then, the slider 42 slides along the guide 44 to move to position P2.

In the meantime, the edge-banding head 80 has finished applying the segment of tape, emptying its own storage unit 84; it also reaches the loading position P2 and points the loading port 86 toward the guide 44.

The storage unit 54 is rotated by 180 degrees to bring the loading port 56 toward the edge-banding head 80. The loading port 56 is now pointed along Y in the opposite direction compared to before.

At the end of the movement, the new position along X of the slider 42 and its orientation ensure that the loading port 56 and the loading port 86 are aligned along Y.

The storage unit 54 ejects the segment of tape it contains through the loading port 56 so that the segment of tape enters the loading port 86 to be stored in the storage unit 84.

Preferably, the storage unit 84 also comprises a gripper mounted to grip an end of the tape protruding from the loading port 56 and drag it inside the storage unit 84.

As soon as the transfer of the segment of tape from the shuttle device 40 to the edge-banding head 80 is completed, the edge-banding head 80 moves toward the new panel to be edge-banded, and the slider 42 returns to position P1 to pick up the next segment of tape; and the cycle restarts.

The coordinated movements and/or the operating logic of the components of the edge-banding system 10 are controlled by an electronic unit 200, e.g. a PLC or a computer or a microprocessor.

In one embodiment, the cutting means on board the slider 42 comprise:
a blade, and preferably
an electro-spindle connected to the blade to move it against the tape and cut it.

In one embodiment, the guide 44 consists of a single linear rail, which is a simpler but bulkier solution.

With the same effects and advantages, the slider 42 may have a tape container and/or a loading port that is rotatable also or only about the Z axis.

Although preferable and advantageous, it is not essential for the slider 42 to have a rotatable tape container and/or loading port. One embodiment envisages, for example, that the segment of tape is loaded onto the slider 42 at one side of the slider 42 and is then passed to the edge-banding head 80 at a different side, e.g. opposite to the previous one.

Although preferable and advantageous, it is not essential for the slider 42 to be adapted to wind the segment of tape on itself or inside itself. One embodiment envisages, for example, that the slider 42 is structured to load the segment of tape folded into a spiral or even without folding it.

From this description, it is clear that the apparatus 10 allows solving the problem of easily and quickly feeding a CNC machining center adapted for edge-banding panels with a segment of tape selected from many.

Furthermore, the apparatus 10 allows exploiting a tape storage unit of potentially unlimited capacity.

## Claims

1. Method for feeding an edge-banding machine with a tape to be applied to an edge of a panel, with the steps of
a) moving a shuttle device to a first position in correspondence with a tape storage unit;
b) dispensing a segment of tape from the tape storage unit and loading it onto the shuttle device; c) moving the shuttle device to a second position in correspondence with a tape loading area of the edge-banding machine ;
d) transferring the segment of tape from the shuttle device to the edge-banding machine.

2. Method according to claim 1, wherein the edge-banding machine is an edge-banding head, the method comprising the further step of
e) moving the edge-banding head in space to travel along an edge of the panel and apply the tape taken from the shuttle device to the edge, and
during at least step e), preferably during all steps a)÷e), the panel is maintained in a vertical plane.

3. Method according to claim 2, wherein at least one of steps a)÷c), preferably all of them, occurs simultaneously with step e).

4. Method according to any preceding claim, wherein steps a) and c) are performed by only linearly and alternately moving the shuttle device between the first position and the second position.

5. Method according to any preceding claim, wherein during step b) a segment of tape is cut from a reel of the tape storage unit to separate the tape segment from the reel and load it onto the shuttle device.

6. Method according to any preceding claim, wherein
during or before step b) the shuttle device aligns a tape container to a tape end to load a tape segment into the tape container, and
during or before step d) the shuttle device aligns its tape container containing the cut tape segment to a tape container mounted on the edge-banding machine , and
in step d) the tape segment is transferred from the tape container of the shuttle device to the tape container of the edge-banding machine .

7. Method according to any preceding claim, wherein during step b) a tape segment is loaded by winding it into a circular tape accumulation carried by the shuttle device.

8. Method according to any preceding claim, wherein during step d) a segment of tape is loaded onto the edge-banding machine by winding it into a circular tape accumulation carried by the edge-banding machine .

9. Method according to any preceding claim, wherein the shuttle device during or after step a) rotates its tape container in a first direction to align a loading port thereof with an end of a tape to be picked up, and the tape segment is transferred from the tape storage unit to the tape container passing through the loading port in a first direction, and then
the shuttle device rotates its tape container in a direction opposite to the first direction to align the loading port with the tape container of the edge-banding machine , and the tape segment is loaded from the container of the shuttle device to the container of the edge-banding machine passing through the loading port of the container of the shuttle device in a direction opposite to the first direction.

10. Edge-banding machine or edge-banding head comprising means for performing the method according to any preceding claim.
